# EUROPEAN PATENT APPLICATION

(11) **EP 0 894 741 A2**
(43) Date of publication of application: **03.02.1999**
(21) Application number: 98660067.4
(22) Date of filing: 01.07.1998
(51) Int. Cl.: B65G 1/137

(54) **Automatic picking system for piece goods units**

(30) Priority: 02.07.1997 FI 972841
(71) Applicant: Erikkilä Nostotekniikkaa Oy, 02430 Masala (FI)
(72) Inventor: Erikkilä, Juha, 02430 Masala (FI)
(74) Representative: Tanskanen, Jarmo Tapio

(57) **Abstract**

A system for automatic picking of different bulk products. The intermediate storages are elongated transporting lines (2) arranged side by side in substantially parallel directions relative to each other at the height of a distance from the level of the floor, so that a space (6) remains below the transporting lines, said transporting lines comprising receiving ends (7) for receiving products from delivering pallets and delivery ends (8) for delivering products to a receiving pallet, which delivery ends (8) are on a line transverse to the longitudinal direction of the transporting lines. The system comprises a guide way (9, 10), the second transfer gear (4) being arranged to circulate along a horizontal endless track mainly in one direction under the guidance of the guide way, said guide way comprising a straight first guide way section (11), which is transverse to the longitudinal direction of the transporting lines and is disposed near the delivery ends so that the second transfer gear together with its pallet can be brought into position directly in front of the delivery ends of the transporting lines to allow picking of the products, and a second guide way section (12), which has been fitted below the transporting lines (2) so that the second transfer gear can pass through the space (6) below the transporting lines.

## Description

The present invention relates to a system as defined in the preamble of claim 1.

Previously known is a system for automatically picking different bulk products from a mass of goods comprising a variety of products to gather a combination of products corresponding to a predetermined picking instruction, such as a purchase order. The system comprises a number of delivering pallets, on which the products are so arranged that one and the same pallet carries a number of exemplars of the same product. Furthermore, the system comprises a number of intermediate storages, the number of which substantially corresponds to the number of different products. A first transfer gear has been arranged to transfer products from delivering pallets into intermediate storages so that a given intermediate storage will contain one and the same product. A second transfer gear has been arranged to grip a receiving pallet, to transport it in accordance with a predetermined instruction to different intermediate storages and to transfer products from the intermediate storages onto the pallet in accordance with the predetermined instruction, such as a purchase order.

A problem with prior-art systems is that they usually take up a large floor area. Furthermore, they involve a great deal of vertical movement of the receiving pallet because in this type of systems the intermediate storages are usually implemented as a high-rise arrangement with multiple tiers of shelving one above the other. Vertical movements to reach intermediate storages located at different heights are time-consuming, and this type of intermediate storage is not applicable for products such as perishable foodstuffs (e.g. milk products), for which a transport chain as fast as possible from production to delivery is desirable.

The object of the present invention is to eliminate the drawbacks described above.

A specific object of the invention is to present a system that allows fast picking of products from a storage in accordance with a predetermined instruction, e.g. a purchase order, and in which the space requirement for this process is as small as possible.

A further object of the invention is to present a system that is especially applicable for perishable daily consumer goods, in particular for use in the dispatching departments of dairies for the picking of dairy products for deliveries in accordance with purchase orders, allowing the amount of goods in intermediate storage to be always kept at a minimum.

A further object of the invention is to present an automatic system in which pallets can preferably be used both as delivering pallets and, after being unloaded, as receiving pallets.

The system of the invention is characterised by what is presented in claim 1.

The system of the invention comprises a number of delivering pallets, on which the products are so arranged that one and the same pallet carries a number of exemplars of the same product; a number of intermediate storages substantially corresponding to the number of different products; a first transfer gear to transfer products from delivering pallets into intermediate storages so that a given intermediate storage will contain one and the same product; and a second transfer gear, which has been arranged to grip a receiving pallet, to transport it in accordance with a predetermined instruction to different intermediate storages and to transfer products from the intermediate storages onto the pallet in accordance with the predetermined instruction, such as a purchase order.

According to the invention, the intermediate storages are elongated transporting lines arranged side by side in substantially parallel directions relative to each other at a distance from the level of the floor, with a space remaining below the transporting lines. The transporting lines comprise receiving ends for receiving products from delivering pallets and delivery ends for delivering products to a receiving pallet. The delivery ends are on a line transverse to the longitudinal direction of the transporting lines. The system comprises a guide way designed to guide the second transfer gear so as to cause it to circulate along a horizontal endless track mainly in one direction. The guide way comprises a straight first guide way section, which is transverse to the longitudinal direction of the transporting lines and is disposed near the delivery ends so that the second transfer gear together with its pallet can be brought into position directly in front of the delivery ends of the transporting lines to allow picking of the products. Further, the guide way comprises a second guide way section, which has been fitted below the transporting lines so that the second transfer gear can pass through the space below the transporting lines.

The invention has the advantage that, by implementing the intermediate storages as adjacent transporting lines preferably at the same level relative to each other, receipt and delivery of the goods from/to the transporting lines can be accomplished while minimising the need for vertical movements. The circulation speed of the intermediate storage can be maximised to ensure that the products will only remain a short time in the intermediate storage. By having the second transfer gear transporting the receiving pallet circulate along a ring-like track in one direction, a plurality of second transfer gears can be used in the system, thus allowing the process of picking the products for a purchase order to be further accelerated. As the return portion, i.e. the second section of the ring-like track is disposed below the transporting lines of the intermediate storage, the system forms a very compact assembly that takes up but little space.

In an embodiment of the system, the system comprises a carrier with a predetermined number of products of the same kind arranged on it.

In an embodiment of the system, the products on the delivering pallet are placed on detachable carriers. The first transfer gear comprises a pushing device for pushing the carriers from the pallet onto the transporting line.

In an embodiment of the system, the products on the pallet are supported by fixed supporters. The first transfer gear comprises means for moving the products from the pallet onto a carrier at the receiving end of the transporting line.

In an embodiment of the system, the delivering pallet is a castor pallet or the like, which comprises a number of shelves placed one over the other for supporting the products. The first transfer gear comprises a first lift device for lifting the castor pallet and bringing its shelves to the level of the receiving ends of the transporting lines so that the shelves can be unloaded by means of a pushing device.

In an embodiment of the system, the transporting line is designed to move the carriers in a file arrangement.

In an embodiment of the system, the transporting line is a sloping roller track or the like, with its receiving end placed at a higher level than the delivery end so that the pallets can move by gravitation from the receiving end towards the delivery end.

In an embodiment of the system, the receiving pallet is a castor pallet or the like, comprising a number of shelves placed one over the other for supporting the products. The second transfer gear comprises a second lift device for lifting the castor pallet and bringing its shelves to the level of the delivery ends of the transporting lines.

In an embodiment of the system, the second transfer gear comprises a pulling device for pulling the carriers from the transporting line onto a receiving pallet.

In an embodiment of the system, the system comprises a number of second transfer gears arranged to move along the same track and guided by the same guide way.

In an embodiment of the system, the second transfer gear comprises a carriage to which the second lift device and the pulling device are connected. The lift device comprises a supporter movable in a vertical direction for supporting the receiving pallet and moving it vertically.

In an embodiment of the system, the delivering pallet is identical with the receiving pallet, and thus the delivering pallet, after being unloaded, can be used as a receiving pallet. The second transfer gear has been arranged to receive the unloaded pallet and carry it along with it on the second guide way section.

In an embodiment of the system, the second transfer gear and/or the receiving pallet comprises a storage device, such as an RF-tag, in which a predetermined picking instruction, such as a purchase order, can be stored for each picking cycle.

In an embodiment of the system, the first transfer gear is a three-dimensional portal robot whose working area extends to the receiving ends of the transporting lines.

In the following, the invention will be described in detail by the aid of a few examples of its embodiments by referring to the attached drawings, in which
Fig. 1 presents a diagrammatic top view of a first embodiment of the system of the invention,
Fig. 2 presents the system in Fig. 1 as seen from the side in the direction II-II,
Fig. 3 presents axonometric view of carrier comprised in the system of the invention, with a number of products placed on it,
Fig. 4. presents an axonometric view of a castor pallet comprised in the system of the invention,
Fig. 5 presents the system of Fig. 2 as seen from the direction V-V,
Fig. 6 presents a second embodiment of the system of the invention, corresponding to Fig. 2, and
Fig. 7 presents the system of Fig. 5 as seen from the direction VII-VII.

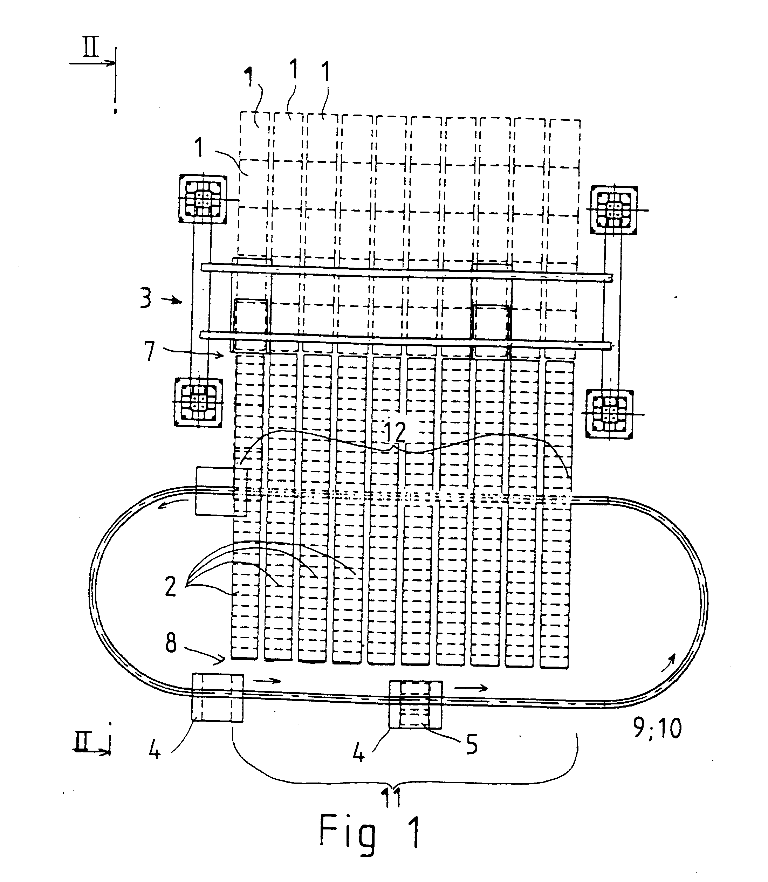

Fig. 1 presents a top view of a system for the picking of products from a storage. The system makes it possible to gather combinations of products consistent with purchase orders from a large number of different products. The example system depicted has been designed especially for use by a dairy, and it allows products accumulated during production on pallets, in this case castor pallets, to be delivered in batches composed in accordance with purchase orders, placed on the same type of castor pallets so that they can be sent further in the transport chain. However, it is obvious that possible areas of application of the invention are not restricted to the dispatching departments of dairies, but that the invention can be applied in many other areas. In the example illustrated by the figure, the number of different products is ten. In the case of a dairy application, these may be different varieties of milk, sour milk, yoghurt, cheese, etc.

The devices comprised in the system are presented in the form of diagrams in the figures and they are described below only as far as necessary for an understanding of the invention because the details of the individual devices can be regarded as belonging to the sphere of knowledge of a person skilled in the art.

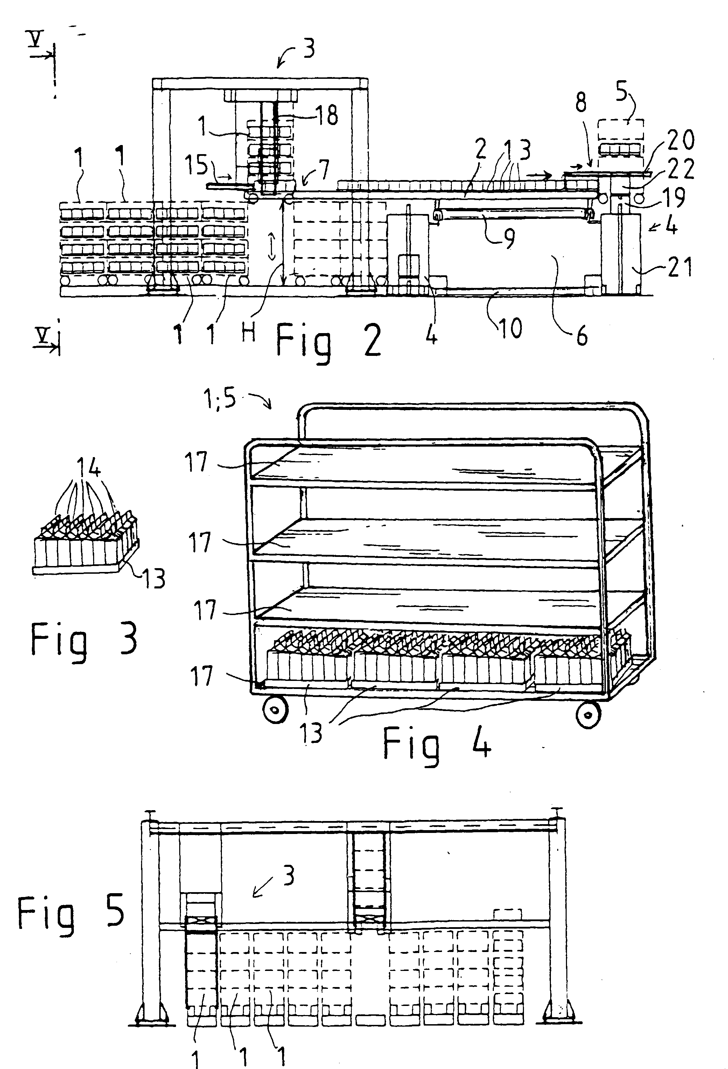

As shown in Fig. 3, a certain number of exemplars of the same product 14 are arranged on a carrier 13 of standard size. Such a carrier 13 together with the products on it forms the smallest product unit that can be ordered. The carriers 13 may be plastic crates or the like in general use and known in themselves, which need not be altered in any way to adapt them to this system.

Fig. 4 presents a pallet 1, 5 as used in the example system, in this case a castor pallet, which can be moved on its castors on a floor. The castor pallets 1, 5 may be generally used conventional castor pallets known in themselves, which do not have to be altered in any way for this system. The castor pallet 1, 5 in Fig. 4 has four shelves 17 disposed one over the other, each shelf 17 accommodating four carriers 13 placed one after the other, as depicted on the lowest shelf in Fig. 4. This type of castor pallets can be used as delivering pallets 1 and as receiving pallets 5 as explained in the following description.

The system comprises a number of delivering castor pallets 1, which are depicted with broken lines in the upper part of the figure. The products 14 are disposed on the carriers 13 and on the castor pallets 1 in the manner described above so that one and the same delivering castor pallet 1 only contains products of one and the same designation.

The system in Fig.1 further comprises ten intermediate storages 2, the number of which, as stated above, corresponds to the number of different products. Each intermediate storage 2 is continuously supplied with products of the same designation. The intermediate storages 2 are elongated transporting lines 2 disposed side by side in parallel directions relative to each other at a height H from the level of the floor such that a space 6 is left below the transporting lines, as shown in the lateral view in Fig. 2. The height H is so fitted that it is somewhat larger than the height of the castor pallet.

The transporting lines 2 have receiving ends 7, onto which the products on the carriers 13 can be pushed from the delivering castor pallets 1. In Fig. 1, the castor pallets 1 are waiting in queue in front of the respective transporting line 2 to be unloaded onto the transporting line 2. At their other ends, the transporting lines 2 have delivery ends 8, from which the carriers 13 can be delivered onto receiving castor pallets 5. The delivery ends 8 of the transporting lines 2 are disposed along the same straight line, which is transverse to the longitudinal direction of the transporting lines 2. The transporting line 2 has been arranged to move the carriers 13 as a file of successive carriers, as can be seen e.g. from Fig. 2. The transporting line may be e.g. a sloping roller track or the like, with its receiving end 7 disposed at a higher level than its delivery end 8 so that the carriers can move by themselves by gravitation from the receiving end 7 towards the delivery end 8 without requiring the use of any active conveyors.

To allow the carriers 13 to be moved from the delivering castor pallets 1 onto the transporting lines 2, the system comprises a first transfer gear 3. The first transfer gear is a portal robot 3 whose working area extends over the area of the receiving ends 7. The first transfer gear 3 comprises a first lift device 18, which is capable of gripping the castor pallet 1 and lifting it to different heights so that the shelves 17 are brought one by one to the level of the receiving ends 8 of the transporting lines 2, allowing the carriers 13 on the shelves 17 together with the products to be pushed onto the transporting line 2, using a pushing device 15 comprised in the first transfer gear 3. The portal robot 3 may comprise several pallet handling devices for lifting the castor pallets and unloading them onto the transporting lines.

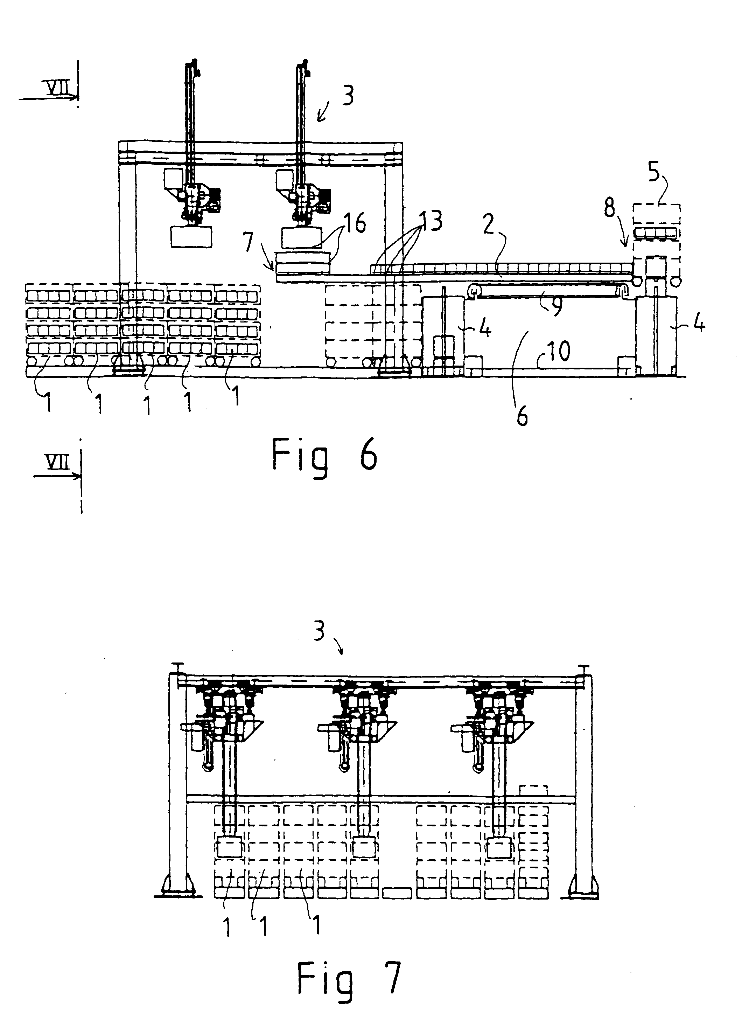

Fig. 6 and 7 present an embodiment which differs from the embodiment in Fig. 1, 2 and 5 in that the products 14 are supported on the delivering castor pallet 1 by fixed supports, e.g. shelves, without being placed on separate carriers 13. Therefore, the first transfer gear 3 comprises means 16 for transferring the products from the castor pallet 1 onto a carrier 13 at the receiving end 17 of the transporting line 2.

The system further comprises a second transfer gear 4, designed to grip the receiving castor pallet 5 and convey it to the delivery ends 8 of different transporting lines 2 in accordance with a predetermined instruction and to move carriers 13 from the transporting lines 2 onto the receiving castor pallet 5 in accordance with the predetermined instruction, i.e. purchase order.

The system comprises a guide way 9, 10, and the second transfer gear 4 has been arranged to circulate horizontally along an endless ring-like track mainly in one direction, guided by this guide way. As shown in Fig. 2, the guide way may consist of e.g. a profiled guide bar 9 suspended below the transporting lines 2 and a guide rail 10 mounted on the floor. The second transfer gear 4 circulates along its endless track in one direction, so the system may comprise several second transfer gears 4; Fig. 1 shows three of them. The larger the number of second transfer gears 4 in the system, the faster is the gathering process.

The guide way 9, 10 comprises a straight first guide way section 11, which is transverse to the longitudinal direction of the transporting lines 2. This guide way section 11 is disposed near the delivery ends 8 of the transporting lines 2 so that the second transfer gear 4 and the receiving castor pallet 5 carried by it can be moved to position in front of the delivery ends 8 of the transporting lines 2 to allow the carriers 13 to be picked.

The second guide way section 12 of the guide way 9, 10 has been fitted below the transporting lines 2 so that the second transfer gear will be able to pass via the space 6 below the transporting lines 2. The second guide way section 12 reaches close enough to the receiving ends 7 of the transporting lines 2 to allow the second transfer gear 4 to easily grip the castor pallet 1, which, as stated above, becomes a receiving pallet 5 when unloaded.

As the transporting lines 2 have been raised to height H from the level of the floor, the second transfer gear 4 is provided with a lift device 19 for lifting the castor pallet 5 and bringing its shelves 17 to the level of the delivery ends 8 of the transporting lines 2. The second transfer gear 4 further comprises a pulling device 20 for pulling the carriers 13 from the transporting line 2 onto the receiving pallet 5. The second transfer gear 4 comprises a carriage 21, to which the second lift device 19 and the pulling device 21 are connected. The carriage 21 is supported by the guide tracks 9, 10. The lift device 19 comprises a supporter 22 for supporting the receiving castor pallet 5 and moving it vertically so that the different shelves 17 of the castor pallet 5 can be brought to the level of the delivery ends 8 of the transporting lines 2 to allow the carriers to be picked by the pulling device 20. After the castor pallet 5 has been conveyed past the delivery ends 8 of the transporting lines 2 and the amounts of products specified in the order have been picked onto it 5, the second transfer gear 4 can release its grip of the castor pallet 5 and lower it back onto the floor, from where it can be moved further and transported to the customer.

The system may be provided with computer control, with a computer controlling the operation of the various devices comprised in the system. The second transfer gear 4 or the castor pallet 5 may be provided with a storage device, such as an RF-tag, in which, for each castor pallet to be loaded, a predetermined picking instruction, such as a purchase order, can be stored before the second transfer gear 4 with its receiving castor pallet 5 reaches the picking portion 11 of its track. The communication between the computer and the RF-tag is preferably implemented using a known wireless data transmission method.

The invention is not restricted to the examples of its embodiments described above, but many variations are possible within the scope of the inventive idea defined by the claims.

## Claims

1. System for automatic picking of different bulk products from a mass of goods comprising a variety of different products to gather a combination of products corresponding to a predetermined picking instruction, such as a purchase order, said system comprising a number of delivering pallets (1), on which the products are so arranged that one and the same pallet carries a number of exemplars of the same product; a number of intermediate storages (2) substantially corresponding to the number of different products; a first transfer gear (3) for transferring products from delivering pallets into intermediate storages so that a given intermediate storage will contain one and the same product; and a second transfer gear (4), which has been arranged to grip a receiving pallet, to transport it in accordance with a predetermined instruction to different intermediate storages and to transfer products from the intermediate storages onto the pallet in accordance with a predetermined instruction, such as a purchase order, **characterised** in that the intermediate storages are elongated transporting lines (2) arranged side by side in substantially parallel directions relative to each other at the height of a distance from the level of the floor, so that a space (6) remains below the transporting lines, said transporting lines comprising receiving ends (7) for receiving products from delivering pallets and delivery ends (8) for delivering products to a receiving pallet, which delivery ends (8) are on a line transverse to the longitudinal direction of the transporting lines; and that the system comprises a guide way (9, 10), the second transfer gear (4) being arranged to circulate along a horizontal endless track mainly in one direction under the guidance of the guide way, said guide way comprising a straight first guide way section (11), which is transverse to the longitudinal direction of the transporting lines and is disposed near the delivery ends so that the second transfer gear together with its pallet can be brought into position directly in front of the delivery ends of the transporting lines to allow picking of the products, and a second guide way section (12), which has been fitted below the transporting lines (2) so that the second transfer gear can pass through the space (6) below the transporting lines.

2. System as defined in claim 1, **characterised** in that the system comprises a carrier (13) on which a predetermined number of exemplars of the same product (14) are arranged.

3. System as defined in claim 2, **characterised** in that the products (14) on the delivering pallet are placed on detachable carriers (13); and that the first transfer gear (3) comprises a pushing device (15) for pushing the carriers from the pallet (1) onto the transporting line (2).

4. System as defined in claim 1, **characterised** in that the products (14) on the pallet are supported by fixed supports; and that the first transfer gear (3) comprises means (16) for moving the products from the pallet onto a carrier (13) at the receiving end (7) of the transporting line (2).

5. System as defined in claim 3 or 4, **characterised** in that the delivering pallet (1) is a castor pallet or the like, comprising a number of shelves (17) placed one over the other for supporting the products; and that the first transfer gear (3) comprises a first lift device (18) for lifting the castor pallet and bringing its shelves to the level of the receiving ends (8) of the transporting lines (2) so that the shelves can be unloaded by means of the pushing device (15) .

6. System as defined in any one of claims 1 - 5, **characterised** in that the transporting line (2) is designed to move the carriers (13) in a file arrangement.

7. System as defined in any one of claims 1 - 6, **characterised** in that the transporting line is a sloping roller track or the like, with its receiving end placed at a higher level than the delivery end so that the pallets can move by gravitation from the receiving end towards the delivery end.

8. System as defined in any one of claims 1 - 7, **characterised** in that the receiving pallet (5) is a castor pallet or the like, comprising a number of shelves (17) placed one over the other for supporting the products; and that the second transfer gear (4) comprises a second lift device (19) for lifting the castor pallet and bringing its shelves to the level of the delivery ends (8) of the transporting lines (2).

9. System as defined in any one of claims 1 - 8, **characterised** in that the second transfer gear (4) comprises a pulling device (20) for pulling the carriers (13) from the transporting line (2) onto a receiving pallet (5) .

10. System as defined in any one of claims 1 - 9, **characterised** in that the system comprises a plurality of second transfer gears (4) arranged to move under the guidance of the same guide way.

11. System as defined in any one of claims 1 - 10, **characterised** in that the second transfer gear (4) comprises a carriage (21) to which the second lift device (19) and the pulling device (20) are connected; and that the lift device (19) comprises a supporter (22) movable in a vertical direction for supporting the receiving pallet (5) and moving it vertically.

12. System as defined in any one of claims 1 - 11, **characterised** in that the delivering pallet (1) is identical with the receiving pallet (5), in which case the delivering pallet (1), after being unloaded, can be used as a receiving pallet (5) ; and that the second transfer gear (4) has been arranged to receive the unloaded pallet (1) and carry it along with it on the second guide way section (12).

13. System as defined in any one of claims 1 - 12, **characterised** in that the second transfer gear (4) and/or the receiving pallet (5) comprise/comprises a storage device, such as an RF-tag, in which a predetermined picking instruction, such as a purchase order, can be stored for each picking cycle.

14. System as defined in any one of claims 1 - 13, **characterised** in that the first transfer gear (3) is a three-dimensional portal robot whose working area extends to the area of the receiving ends (7) of the transporting lines (2).
